# EUROPEAN PATENT APPLICATION

(11) **EP 3 955 198 A1**
(43) Date of publication of application: **16.02.2022**
(21) Application number: 20788623.5
(22) Date of filing: 18.03.2020
(51) Int. Cl.: G06Q 30/00

(54) **METHOD AND APPARATUS FOR GENERATING AND QUERYING TRACING CODE OF COMMODITY**

(30) Priority: 09.04.2019 CN 201910281876
(71) Applicant: Newlixon Tech. Co., Ltd., Nanjing, Jiangsu 210012 (CN)
(72) Inventor: MAO, Lin, Shenzhen, Guangdong 518000 (CN)
(74) Representative: Cabinet Chaillot
(86) International application number: PCT/CN2020/079837
(87) International publication number: WO 2020/207216

(57) **Abstract**

The invention provides a method for generating traceability code of commodity, comprising: acquiring traceability information of a commodity, and generating a traceability report based on the traceability information; acquiring first image information of the commodity, performing fingerprint extraction on the first image information of the commodity, and acquiring first fingerprint information of the commodity; generating a traceability code of the commodity according to the traceability report and the first fingerprint information. By adding the fingerprint information corresponding to the commodity image information to the commodity traceability code, the corresponding binding of the commodity traceability code and the real commodity can be realized, which avoids problems such as messy application of the traceability label, and improves the anti-counterfeiting performance of the traceability label.

## Description

### BACKGROUND OF THE INVENTION

### 1. Field of the Invention

The invention relates to the technical field of information processing, in particular to a method and an apparatus for generating and querying traceability code of commodity.

### 2. Description of the Related Art

Food safety is of great significance to people's daily life, and judging the authenticity of commodity traceability information has always been a hot research topic in the field of food traceability. Although there are currently a variety of anti-counterfeiting labels and anti-counterfeiting technologies, such as RFID tags, QR code internal and external code anti-counterfeiting, etc., these anti-counterfeiting labels and anti-counterfeiting technologies all use hardware (paper, electronic signature) to prevent counterfeiting, which leads to the high cost of label production on the one hand, and on the other hand, it actually only raises the threshold of anti-counterfeiting, and in theory it can still be forged in practice.

### SUMMARY OF THE INVENTION

In view of the above problems, the invention aims to provide a method for commodity traceability.

The purpose of the invention is achieved by adopting the following technical solutions:

The first aspect of the invention provides a method for generating traceability code of commodity, comprising:
acquiring traceability information of a commodity, and generating a traceability report based on the traceability information;
acquiring first image information of the commodity, performing fingerprint extraction on the first image information of the commodity, and acquiring first fingerprint information of the commodity;
generating a traceability code of the commodity according to the traceability report and the first fingerprint information.

In one embodiment, acquiring first image information of the commodity and performing fingerprint extraction on the first image information of the commodity comprise:
collecting commodity image, and performing image segmentation processing on the commodity image; inputting the segmented commodity image to a neural network model acquired based on deep learning training, and acquiring the feature vector output by the neural network model that is distinguishable for commodity classification as the first fingerprint information of the commodity.

In one embodiment, the neural network model specifically adopts the LeNet-5 convolutional neural network model based on the Tensorflow framework; the LeNet-5 convolutional neural network model comprises a first convolutional layer, a first pooling layer, a second convolutional layer, a second pooling layer, a first fully connected layer, and a second fully connected layer that are sequentially connected;

The invention further comprises: acquiring the feature vector output by the second fully connected layer as the first fingerprint information of the commodity.

The second aspect of the invention provides a method for querying traceability code of commodity, comprising:

receiving the traceability code sent by the consumer terminal, wherein the traceability code is the traceability code generated according to the method for generating traceability code of commodity according to any one of embodiments in the above first aspect;
extracting the traceability report corresponding to the traceability code;
sending the traceability report to the consumer terminal.

In one embodiment, the method further comprises:
receiving second image information of the commodity sent by the consumer terminal, performing fingerprint extraction on the second image information of the commodity, and acquiring second fingerprint information of the commodity;
comparing the acquired second fingerprint information with the first fingerprint information carried in the traceability code, and outputting the credibility information of the traceability code and sending to the consumer terminal.

In one embodiment, receiving second image information of the commodity sent by the consumer terminal and performing fingerprint extraction on the second image information of the commodity comprise:
receiving the commodity image sent by the consumer terminal, and performing image segmentation processing on the commodity image; inputting the segmented commodity image to a neural network model acquired based on deep learning training, and acquiring the feature vector output by the neural network model that is distinguishable for commodity classification as the second fingerprint information of the commodity.

In one embodiment, comparing the acquired second fingerprint information with the first fingerprint information carried in the traceability code specifically comprises:
comparing the acquired second fingerprint information with the first fingerprint information pre-stored in the traceability code, and acquiring the probability that the second fingerprint information is consistent with the first fingerprint information through the chi-square test as the credibility information.

The third aspect of the invention provides an apparatus for generating traceability code of commodity, comprising:
a first processing unit, which is configured to acquire traceability information of the commodity, and generate a traceability report based on the traceability information;
a second processing unit, which is configured to acquire first image information of the commodity, perform fingerprint extraction on the first image information of the commodity, and acquire first fingerprint information of the commodity;
a generating unit, which is configured to generate the traceability code of the commodity according to the traceability report and the first fingerprint information.

In one embodiment, the second processing unit is further configured to:
collect commodity image, and perform image segmentation processing on the commodity image; input the segmented commodity image to a neural network model acquired based on deep learning training, and acquire the feature vector output by the neural network model that is distinguishable for commodity classification as the first fingerprint information of the commodity.

In one embodiment, in the second processing unit, the neural network model specifically adopts the LeNet-5 convolutional neural network model based on the Tensorflow framework; the LeNet-5 convolutional neural network model comprises a first convolutional layer, a first pooling layer, a second convolutional layer, a second pooling layer, a first fully connected layer, and a second fully connected layer that are sequentially connected;
wherein acquiring the feature vector output by the second fully connected layer as the first fingerprint information of the commodity.

The fourth aspect of the invention provides an apparatus for querying traceability code of commodity, comprising:
a first receiving unit, which is configured to receive the traceability code sent by the consumer terminal, wherein the traceability code is the traceability code generated by the apparatus for generating traceability code of commodity according to claim 8;
an extracting unit, which is configured to extract the traceability report corresponding to the traceability code;
a sending unit, which is configured to send the traceability report to the consumer terminal.

In one embodiment, the apparatus further comprises:
a second receiving unit, which is configured to receive second image information of the commodity sent by the consumer terminal;
a processing unit, which is configured to perform fingerprint extraction on the second image information of the commodity, and acquire second fingerprint information of the commodity;
a comparing unit, which is configured to compare the acquired second fingerprint information with the first fingerprint information carried in the traceability code, and output the credibility information of the traceability code;
the sending unit is further configured to send the credibility information to the consumer terminal.

In one embodiment, the processing unit is further configured to receive the commodity image sent by the consumer terminal;
the processing unit is further configured to perform image segmentation processing on the commodity image; input the segmented commodity image to a neural network model acquired based on deep learning training, and acquire the feature vector output by the neural network model that is distinguishable for commodity classification as the second fingerprint information of the commodity.

In one embodiment, the comparing unit is further configured to compare the acquired second fingerprint information with the first fingerprint information pre-stored in the traceability code, and acquire the probability that the second fingerprint information is consistent with the first fingerprint information through the chi-square test as the credibility information.

The advantageous effects of the invention are: by adding the fingerprint information corresponding to the commodity image information to the commodity traceability code, the corresponding binding of the commodity traceability code and the real commodity can be realized, which avoids problems such as messy application of the traceability label, and improves the anti-counterfeiting performance of the traceability label.

At the same time, the fingerprint information is extracted from the image information uploaded by the consumer, and is compared with the fingerprint information carried in the traceability code to verify the self-verification of the traceability report, which effectively improves the credibility of the traceability label.

The invention adopts software encryption, does not rely on the traditional anti-counterfeiting traceability label for hardware anti-counterfeiting technology, and has low production cost.

### BRIEF DESCRIPTION OF THE DRAWINGS

The invention will be further described with the drawings, but the embodiments in the drawings do not constitute any limitation to the invention. For those of ordinary skill in the art, other drawings may be obtained according to the following drawings without creative efforts.
FIG. 1 is a flow chart of a method for generating traceability code of commodity according to the invention;
FIG. 2 is an architecture diagram of a convolutional neural network adopted by the invention;
FIG. 3 is a flow chart of a method for querying traceability code of commodity according to the invention;
FIG. 4 is a structural diagram of an apparatus for generating traceability code of commodity according to the invention;
FIG. 5 is a structural diagram of an apparatus for querying traceability code of commodity according to the invention;

### DETAILED DESCRIPTION OF THE PREFERRED EMBODIMENTS

The invention will be further described with reference to the following application scenarios.

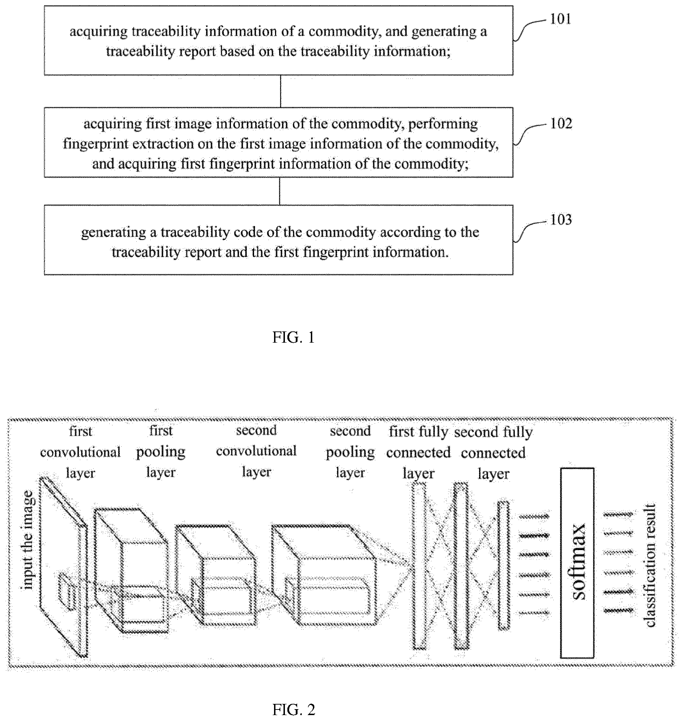

With reference to FIG. 1, the invention discloses a method for generating traceability code of commodity, comprising:
S101 acquiring traceability information of a commodity, and generating a traceability report based on the traceability information;
S102 acquiring first image information of the commodity, performing fingerprint extraction on the first image information of the commodity, and acquiring first fingerprint information of the commodity;
in one embodiment, the step S102 comprises:
collecting commodity image, and performing image segmentation processing on the commodity image; inputting the segmented commodity image to a neural network model acquired based on deep learning training, and acquiring the feature vector output by the neural network model that is distinguishable for commodity classification as the first fingerprint information of the commodity.

Wherein the neural network model specifically adopts the LeNet-5 convolutional neural network model based on the Tensorflow framework;

As shown in FIG. 2, the LeNet-5 convolutional neural network model comprises a first convolutional layer, a first pooling layer, a second convolutional layer, a second pooling layer, a first fully connected layer, a second fully connected layer, a softmax classification layer, and a classification output layer.

Wherein the trained LeNet-5 convolutional neural network model can classify the input commodity image, input the commodity image to the trained LeNet-5 convolutional neural network model, and its classification output layer can input the classification of the commodity; the second fully connected layer can output a feature vector with distinguishing degree of commodity classification according to the input commodity image, classify the feature vector through the softmax classification layer, and output the classification of the commodity in the classification output layer;

in one embodiment, using the feature vector output by the second fully connected layer that has distinguishability for commodity classification as the fingerprint information of the commodity image can effectively use the fingerprint information to describe the commodity characteristics, so that the fingerprint information and the commodity characteristics are in one-to-one correspondence.

In one scenario, the output of the second fully connected layer of the LeNet-5 convolutional neural network model is a multi-dimensional array, which may specifically be an array with 84 elements.

In the above embodiment, the multi-dimensional feature vector output by the middle layer of the LeNet-5 convolutional neural network model is used as the fingerprint information of the commodity image, which can accurately describe the feature information of the commodity according to the classification feature of the commodity, which enables the fingerprint information of the commodity to be accurately corresponded to the commodity, so that the traceability code and the commodity accurately correspond, and the anti-counterfeiting effect of the traceability code is improved.

S103 generating a traceability code of the commodity according to the traceability report and the first fingerprint information.

In one embodiment, a traceability report is first generated based on the traceability information of the commodity, and the traceability report is encoded, and the traceability report code is used to generate the traceability code; in the encoding process, the first fingerprint information obtained above is mixed into the traceability code to become the traceability code of the commodity.

In one embodiment, the traceability code is made into a traceability label, and the traceability label is added to the commodity packaging bag.

Wherein the traceability label can be in the form of QR code, RFID code, etc.

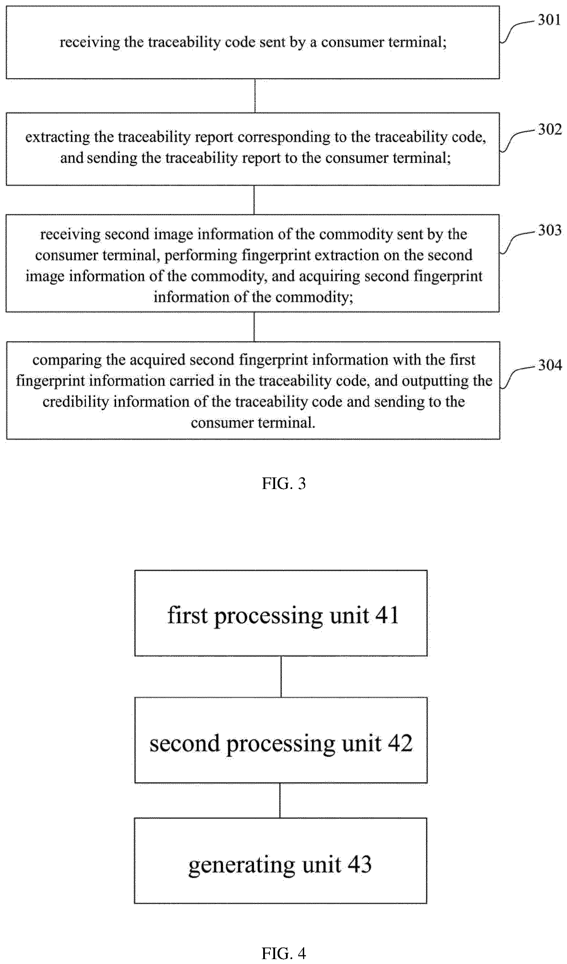

With reference to FIG. 3, the invention discloses a method for querying traceability code of commodity, comprising:
S301 receiving the traceability code sent by the consumer terminal;
in one embodiment, the traceability code is the traceability code generated by any of the above embodiments of the method for generating traceability code of commodity shown in FIG. 1.

Further, the traceability code carries the traceability report information and the first fingerprint information of the commodity.

In one embodiment, the consumer logs in to the designated website through the consumer terminal and enters the traceability code of the commodity in the website.

Alternatively, the consumer directly scans the traceability code through APP, applet, etc., and sends the traceability code directly to the server; and the server returns a traceability report corresponding to the traceability code.

S302 extracting the traceability report corresponding to the traceability code, and sending the traceability report to the consumer terminal;
in one scenario, the server extracts the corresponding traceability report from the database according to the traceability code sent by the consumer terminal, and sends the traceability report to the consumer terminal for display;
further, the report is a web interface with an interface for consumers to upload image information. Consumers can shoot or send the stored image information of the commodity to the server through this interface for further verification by the server.

S303 receiving second image information of the commodity sent by the consumer terminal, performing fingerprint extraction on the second image information of the commodity, and acquiring second fingerprint information of the commodity;
in one embodiment, the step S303 comprises:
receiving the commodity image sent by the consumer terminal, and performing image segmentation processing on the commodity image; inputting the segmented commodity image to a neural network model acquired based on deep learning training, and acquiring the feature vector output by the neural network model that is distinguishable for commodity classification as the second fingerprint information of the commodity.

Wherein the neural network model specifically adopts the LeNet-5 convolutional neural network model based on the Tensorflow framework as shown in FIG. 2.

In one embodiment, after the consumer terminal receives the traceability report, it can further upload the image information of the commodity through the interface displaying the traceability report, and the server obtains the corresponding second fingerprint information according to the commodity image information uploaded by the consumer.

In one scenario, the image information of the commodity is a picture of the commodity taken by the consumer.

S304 comparing the acquired second fingerprint information with the first fingerprint information carried in the traceability code, and outputting the credibility information of the traceability code and sending to the consumer terminal.

In one embodiment, comparing the acquired second fingerprint information with the first fingerprint information pre-stored in the traceability code, and acquiring the probability that the second fingerprint information is consistent with the first fingerprint information through the chi-square test.

In one embodiment, the probability that the second fingerprint information is consistent with the first fingerprint information through the chi-square test is used as the credibility information.

In one scenario, the consumer finds the traceability code on the commodity packaging, enters the traceability code through the consumer terminal (mobile phone, computer, etc.) to the designated website, and queries the traceability information corresponding to the traceability code; the server queries the received traceability code and returns the corresponding traceability report to the consumer terminal; the consumer terminal displays the traceability report; further, the consumer uploads the image information of the commodity to the server through the display interface of the traceability report; the server extracts the fingerprint information from the received image information, compares the extracted fingerprint information with the fingerprint information originally carried by the traceability code, and judges the credibility of the traceability report by calculating the similarity, which realized the self-verification of the traceability report, and then returns the credibility information to the consumer terminal for display.

In the above embodiment of the invention, by adding the fingerprint information corresponding to the commodity image information to the commodity traceability code, the corresponding binding of the commodity traceability code and the real commodity can be realized, which avoids problems such as messy application of the traceability label, and improves the anti-counterfeiting performance of the traceability label.

At the same time, the fingerprint information is extracted from the image information uploaded by the consumer, and is compared with the fingerprint information carried in the traceability code to verify the self-verification of the traceability report, which effectively improves the credibility of the traceability label.

The invention adopts software encryption, does not rely on the traditional anti-counterfeiting traceability label for hardware anti-counterfeiting technology, and has low production cost.

Further, taking tea leaves as an example, an implementation of generating and querying tea traceability code is shown, wherein tea leaves can be classified according to leaf size and leaf shape; wherein the leaf characteristics can be divided into one bud, one bud and one leaf in early development, one bud and two leaves in early development, one bud and three leaves or more, etc.; the leaf length can be divided into less than 1.5 cm, 1.5-2 cm, 2-3 cm, 3 cm or more, etc.

In the model training stage, the image of the tea leaves and the corresponding classification information are obtained, and the image of the tea leaves and the corresponding classification information are input into the LeNet-5 convolutional neural network model to complete the training of the model.

When generating the traceability code, obtaining the image information of the tea leaves for which the traceability code is to be generated, collecting the images of the batch of tea leaves, and inputting the obtained tea images into the trained LeNet-5 convolutional neural network model; using the feature vector output by the model as the first fingerprint information of the batch of tea, and generating the traceability code and the traceability label of the batch of tea according to the first fingerprint information and the traceability report of the batch of tea.

When querying the traceability information, the consumer enters the traceability code on the tea packaging bag into the server, and checks the traceability report returned by the server; in addition, the consumer can take photos of the tea and upload the photos to the server through the network interface in the traceability report; after the server receives the tea photo uploaded by the consumer, it performs segmentation processing on the tea photo, enters the segmented tea photo into the trained LeNet-5 convolutional neural network model to acquire the feature vector output by the trained LeNet-5 convolutional neural network model as the second fingerprint information, compares the acquired second fingerprint information with the first fingerprint information carried in the traceability source code, and acquires the probability that the second fingerprint information is consistent with the first fingerprint information through the chi-square test as the credibility information of the traceability source code and returns to the consumer.

The above embodiments of the invention extract the image fingerprint information of the traceable commodity by using artificial intelligence neural network technology, bind the fingerprint information of the traceable commodity itself and its traceability code, realize one-to-one correspondence of error codes, and the credibility of the traceability code.

With reference to FIG. 4, the invention discloses an apparatus for generating traceability code of commodity, comprising:
a first processing unit 41, which is configured to acquire traceability information of the commodity, and generate a traceability report based on the traceability information;
a second processing unit 42, which is configured to acquire first image information of the commodity, perform fingerprint extraction on the first image information of the commodity, and acquire first fingerprint information of the commodity;
a generating unit 43, which is configured to generate the traceability code of the commodity according to the traceability report and the first fingerprint information.

In one embodiment, the second processing unit 42 is further configured to:
collect commodity image, and perform image segmentation processing on the commodity image; input the segmented commodity image to a neural network model acquired based on deep learning training, and acquire the feature vector output by the neural network model that is distinguishable for commodity classification as the first fingerprint information of the commodity.

In one embodiment, in the second processing unit 42, the neural network model specifically adopts the LeNet-5 convolutional neural network model based on the Tensorflow framework; the LeNet-5 convolutional neural network model comprises a first convolutional layer, a first pooling layer, a second convolutional layer, a second pooling layer, a first fully connected layer, and a second fully connected layer that are sequentially connected;
wherein acquiring the feature vector output by the second fully connected layer as the first fingerprint information of the commodity.

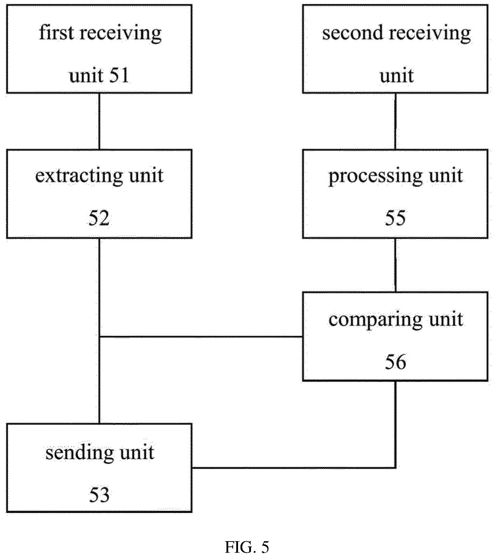

With reference to FIG. 5, the invention discloses an apparatus for querying traceability code of commodity, comprising:
a first receiving unit 51, which is configured to receive the traceability code sent by the consumer terminal, wherein the traceability code is the traceability code generated by the apparatus for generating traceability code of commodity according to claim 8;
an extracting unit 52, which is configured to extract the traceability report corresponding to the traceability code;
a sending unit 53, which is configured to send the traceability report to the consumer terminal.

In one embodiment, the apparatus further comprises:
a second receiving unit 54, which is configured to receive second image information of the commodity sent by the consumer terminal;
a processing unit 55, which is configured to perform fingerprint extraction on the second image information of the commodity, and acquire second fingerprint information of the commodity;
a comparing unit 56, which is configured to compare the acquired second fingerprint information with the first fingerprint information carried in the traceability code, and output the credibility information of the traceability code;
the sending unit 53 is further configured to send the credibility information to the consumer terminal.

In one embodiment, the processing unit is further configured to receive the commodity image sent by the consumer terminal;
the processing unit 55 is further configured to perform image segmentation processing on the commodity image; input the segmented commodity image to a neural network model acquired based on deep learning training, and acquire the feature vector output by the neural network model that is distinguishable for commodity classification as the second fingerprint information of the commodity.

In one embodiment, the comparing unit is further configured to compare the acquired second fingerprint information with the first fingerprint information pre-stored in the traceability code, and acquire the probability that the second fingerprint information is consistent with the first fingerprint information through the chi-square test as the credibility information.

It should be noted that this generating and querying apparatus is used to realize the functions of the above generating and querying methods, and each module in the apparatus corresponds to the steps of the above method, and can implement different implementations of the above method.

It should be noted that the functional units/modules in the various embodiments of the invention may be integrated into one processing unit/module, or each unit/module may exist alone physically, or two or more units/modules are integrated into one unit/module. The above integrated unit/module can be implemented in the form of hardware or software functional unit/module.

Finally, it should be noted that the above embodiments are only used to illustrate the technical solutions of the invention, and not to limit the protection scope of the invention. Although the invention has been described in detail with reference to the preferred embodiments, those of ordinary skill in the art should analyze that the technical solution of the invention can be modified or equivalently replaced without departing from the essence and scope of the technical solution of the invention.

## Claims

1. A method for generating traceability code of commodity, comprising: acquiring traceability information of a commodity, and generating a traceability report based on the traceability information; acquiring first image information of the commodity, performing fingerprint extraction on the first image information of the commodity, and acquiring first fingerprint information of the commodity; generating a traceability code of the commodity according to the traceability report and the first fingerprint information.

2. The method for generating traceability code of commodity according to claim 1, wherein acquiring first image information of the commodity and performing fingerprint extraction on the first image information of the commodity comprise: collecting commodity image, and performing image segmentation processing on the commodity image; inputting the segmented commodity image to a neural network model acquired based on deep learning training, and acquiring the feature vector output by the neural network model that is distinguishable for commodity classification as the first fingerprint information of the commodity.

3. The method for generating traceability code of commodity according to claim 2, wherein the neural network model specifically adopts the LeNet-5 convolutional neural network model based on the Tensorflow framework; the LeNet-5 convolutional neural network model comprises a first convolutional layer, a first pooling layer, a second convolutional layer, a second pooling layer, a first fully connected layer, and a second fully connected layer that are sequentially connected; the method further comprises: acquiring the feature vector output by the second fully connected layer as the first fingerprint information of the commodity.

4. A method for querying traceability code of commodity, comprising: receiving the traceability code sent by the consumer terminal, wherein the traceability code is the traceability code generated according to the method for generating traceability code of commodity according to any one of claims 1-3; extracting the traceability report corresponding to the traceability code; sending the traceability report to the consumer terminal.

5. The method for querying traceability code of commodity according to claim 4, wherein the method further comprises: receiving second image information of the commodity sent by the consumer terminal, performing fingerprint extraction on the second image information of the commodity, and acquiring second fingerprint information of the commodity; comparing the acquired second fingerprint information with the first fingerprint information carried in the traceability code, and outputting the credibility information of the traceability code and sending to the consumer terminal.

6. The method for querying traceability code of commodity according to claim 5, wherein receiving second image information of the commodity sent by the consumer terminal and performing fingerprint extraction on the second image information of the commodity comprise: receiving the commodity image sent by the consumer terminal, and performing image segmentation processing on the commodity image; inputting the segmented commodity image to a neural network model acquired based on deep learning training, and acquiring the feature vector output by the neural network model that is distinguishable for commodity classification as the second fingerprint information of the commodity.

7. The method for querying traceability code of commodity according to claim 5, wherein comparing the acquired second fingerprint information with the first fingerprint information carried in the traceability code specifically comprises: comparing the acquired second fingerprint information with the first fingerprint information pre-stored in the traceability code, and acquiring the probability that the second fingerprint information is consistent with the first fingerprint information through the chi-square test as the credibility information.

8. An apparatus for generating traceability code of commodity, comprising: a first processing unit, which is configured to acquire traceability information of the commodity, and generate a traceability report based on the traceability information; a second processing unit, which is configured to acquire first image information of the commodity, perform fingerprint extraction on the first image information of the commodity, and acquire first fingerprint information of the commodity; a generating unit, which is configured to generate the traceability code of the commodity according to the traceability report and the first fingerprint information.

9. An apparatus for querying traceability code of commodity, comprising: a first receiving unit, which is configured to receive the traceability code sent by the consumer terminal, wherein the traceability code is the traceability code generated by the apparatus for generating traceability code of commodity according to claim 8; an extracting unit, which is configured to extract the traceability report corresponding to the traceability code; a sending unit, which is configured to send the traceability report to the consumer terminal.
